# EUROPEAN PATENT APPLICATION

(11) **EP 4 556 410 A1**
(43) Date of publication of application: **21.05.2025**
(21) Application number: 23860805.3
(22) Date of filing: 28.08.2023
(51) Int. Cl.: B65G 17/46, B65G 17/40, B65G 17/08, H01M 50/20

(54) **TRANSFER DEVICE**

(30) Priority: 29.08.2022 KR 20220108576
(71) Applicant: LG Energy Solution, Ltd., Seoul 07335 (KR)
(72) Inventor: KANG, Ho Won, Daejeon 34122 (KR)
(74) Representative: Goddar, Heinz J.
(86) International application number: PCT/KR2023/012698
(87) International publication number: WO 2024/049129

(57) **Abstract**

Disclosed herein relates to a transfer device including a plurality of interconnected plates, and unidirectionally transferring the battery cells by seating them on the plates, including: a seating part on which the battery cell is seated, wherein the seating part includes: a center plate where a battery cell is seated, a support plate connected to each side of the center plate, and a moving bar moving on the support plate toward the center plate to support the sides of a seated battery cell.

## Description

### [Technical Field]

The present invention relates to a transfer device for transferring battery cells unidirectionally by seating them, and has a structure that enables the seated battery cells to be aligned and fixed simultaneously while being transferred.

This application claims the benefit of priority to Korean Patent Application No. 10-2022-0108576, filed on August 29, 2022, the disclosure of which is incorporated herein by reference in its entirety.

### [Background Technology of the Invention]

Lithium secondary batteries are manufactured in cylindrical, prismatic, pouch-type, and the like depending on the shape, and pouch-type battery cells, which can be stacked with high degree of integration, have high energy density per weight, and are inexpensive and easy to transform, are used in various fields.

The operating voltage of these pouch-type battery cells is approximately 2.5 to 4.2V. Therefore, if a higher output voltage is required, a plurality of battery cells may be connected in series or parallel to form a battery pack.

The manufactured pouch-type battery cells can be transferred in a variety of ways, most commonly by belt or plate conveyors.

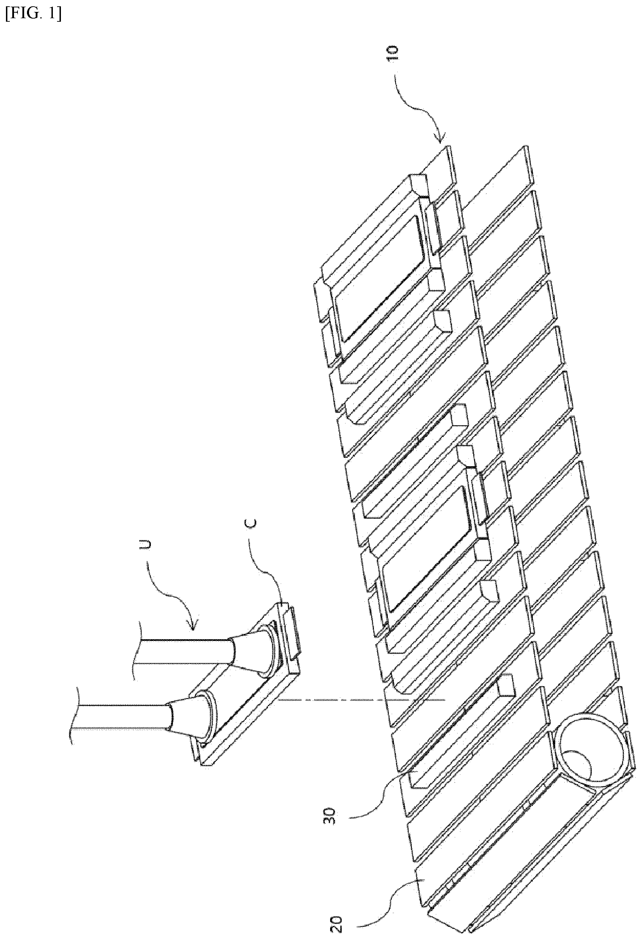

FIG. 1 illustrates the process of loading a battery cell C on a conveyor 10, which is adsorbed and transferred by a suction unit U.

The battery cells C transferred one by one by the suction unit U are seated on a plate 20 included in the conveyor 10 at certain distance apart as shown in FIG. 1. Here, the plate 20 may be provided with a support bar 30 spaced at predetermined distance to prevent the battery cell C from being misplaced. The battery cell C is transferred by the conveyor 10 with the battery cell C inserted between the support bars 30.

However, in the conveyor 10 with the above structure, since the support bar 30 is fixed on the plate 20, if the lowering position of the suction unit U and the position adjustment of the support bar 30 fail, there may be a problem that the battery cell C is seated in an incorrect position, or that the battery cell C is not properly inserted between the support bars 30.

### [Prior Art Documents]

Korean Patent Publication No. 10-2015-0026316

### [Description of the Invention]

### [Technical Problem]

Accordingly, the present invention was conceived to solve the above problems, and aims to provide a transfer device capable of aligning and fixing the battery cells during transfer.

Other objects and advantages of the present invention will be understood from the following description, and will become apparent from the embodiments of the present invention. It will also be readily apparent that the objects and advantages of the present invention may be implemented by the means and combinations thereof disclosed in the claims of the patent.

### [Technical Solution]

According to the present invention, it provides a transfer device configured by a plurality of interconnected plates, and unidirectionally transferring battery cells by seating them on the plates, including: a seating part on which the battery cell is seated, wherein the seating part included: a center plate where a battery cell is seated; a support plate connected to each side of the center plate; and a moving bar moving on the support plate toward the center plate to support the sides of a seated battery cell.

The seating part may further include a sensor for detecting an object.

The sensor is provided on the center plate, the sensor provided on the center plate detects that the battery cell is seated on the center plate, and the moving bar may move forwardly toward the center plate upon detection by the sensor to pressurize the battery cell.

The transfer device may include a plurality of seating parts spaced apart in predetermined distance.

The support plate may include: a first support plate connected to one side of the center plate; and a second support plate connected to the other side of the center plate, wherein the moving bar is provided in a pair, the pair of moving bars may be included in the first support plate and the second support plate and move toward the center plate to support and fix both sides of a battery cell seated on the center plate.

The moving bar included in the first support plate and the second support plate may move in opposite directions to each other.

The seating part may include a cylinder body provided at a lower part of the support plate, with a piston inserted therein reciprocating toward the center plate.

The support plate may include a guide part extending in the transfer direction, the piston may include a coupling member, which passes through the guide part and couples to the moving bar, at an end, wherein the moving bar coupled to the piston may move toward the center plate by the coupling member guided by the guide part.

The seating part may further include an auxiliary plate connected to one side of the support plate that is opposite the center plate, wherein the seating part may include a cylinder body provided at a lower part of the auxiliary plate, with a piston inserted therein reciprocating toward the center plate.

The support plate may include a guide part extending in the transfer direction, the piston may include a coupling member, which passes through the guide part and couples to the moving bar, at an end, wherein the moving bar coupled to the piston may move toward the center plate by the coupling member guided by the guide part.

The moving bar may be formed by extending in a direction orthogonal to the transfer direction.

The moving bar may include an inclined surface at an upper corner part facing the center plate.

The transfer device may further include a connection member connecting the neighboring pair of plates.

### [Advantageous Effects]

According to the present invention, it is possible to improve the transfer efficiency of a battery cell by preventing the phenomenon of distortion of the battery cell in the process of transferring the battery cell through a plate-type conveyor.

### [Brief Description of the Drawings]

FIG. 1 illustrates a conventional conveyor transfer device.
FIG. 2 is a perspective view of a transfer device according to a first embodiment of the present invention.
FIG. 3 illustrates a seating part of the transfer device of FIG. 2.
FIG. 4 is a bottom perspective view of the seating part of FIG. 3.
FIG. 5 illustrates a sensor applied to the seating part.
FIG. 6(a) and (b) illustrates a seating part prior to a battery cell being seated.
FIG. 7(a) and (b) illustrates a seating part after a battery cell is seated and prior to aligning the battery cell.
FIG. 8 (a) and (b) illustrates a seating part after aligning the battery cell.
FIG. 9 is a perspective view of a transfer device according to a second embodiment of the present invention.
FIG. 10 is a perspective view of a seating part included in the transfer device of FIG. 9.

### [Best Mode for Carrying out the Invention]

Hereinafter, preferred embodiments of the present invention will be described in detail with reference to the accompanying drawings. Before doing so, it should be noted that the terms and words used in this specification and claims are not to be construed in their ordinary or dictionary sense, but rather in a sense and concept consistent with the technical idea of the present invention, based on the principle that the inventor may properly define the concept of a term to best describe his invention.

Accordingly, it is to be understood that the embodiments described herein and the configurations illustrated in the drawings are only the most preferred embodiments of the present invention and do not represent all of the technical ideas of the present invention, and that there may be various equivalents and variations that may be substituted for them at the time of filing the present disclosure.

In addition, in describing the present invention, detailed descriptions of related known configurations or features are omitted where it is determined that such detailed descriptions would obscure the essence of the present invention.

The embodiments of the present invention are provided to illustrate the present invention more fully to those of ordinary skill in the art, and the shapes and sizes of the components in the drawings may be exaggerated, omitted, or shown schematically for clarity. Accordingly, the size or proportions of each component are not necessarily indicative of its actual size or proportions.

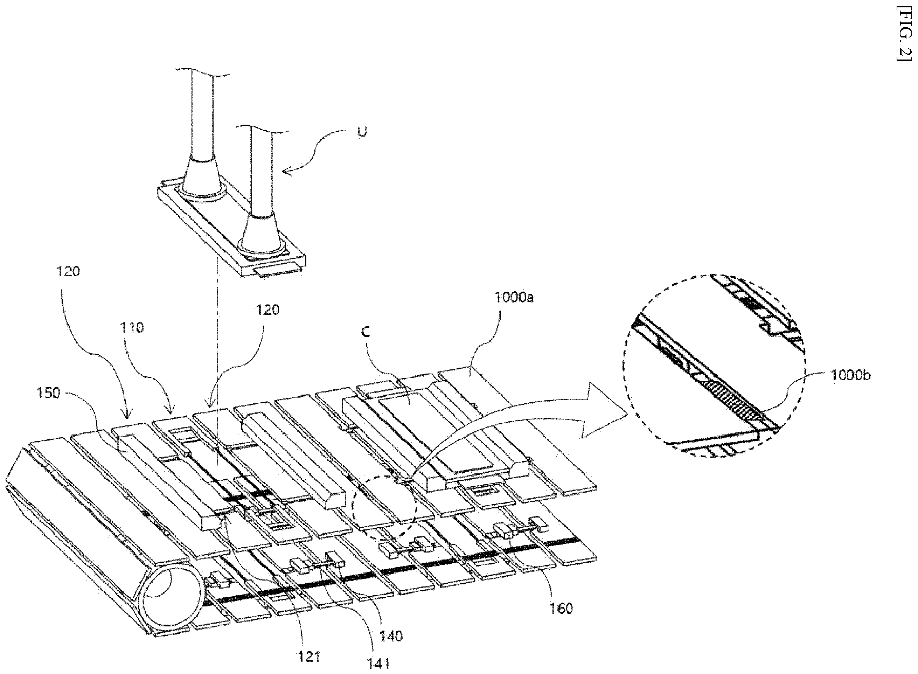

The present invention relates to a transfer device 1000 (the reference number 1000 is suggested to add into FIG.2) with an alignment function. More specifically, the present invention relates to a transfer device 1000 including a plurality of plates 1000a connected to each other, and which seats a battery cell C on the plates 1000a for unidirectional transfer.

The transfer device 1000 of the present invention is characterized by pressurizing both sides of a battery cell C seated on a plate 1000a to align and fix the position of the battery cell C.

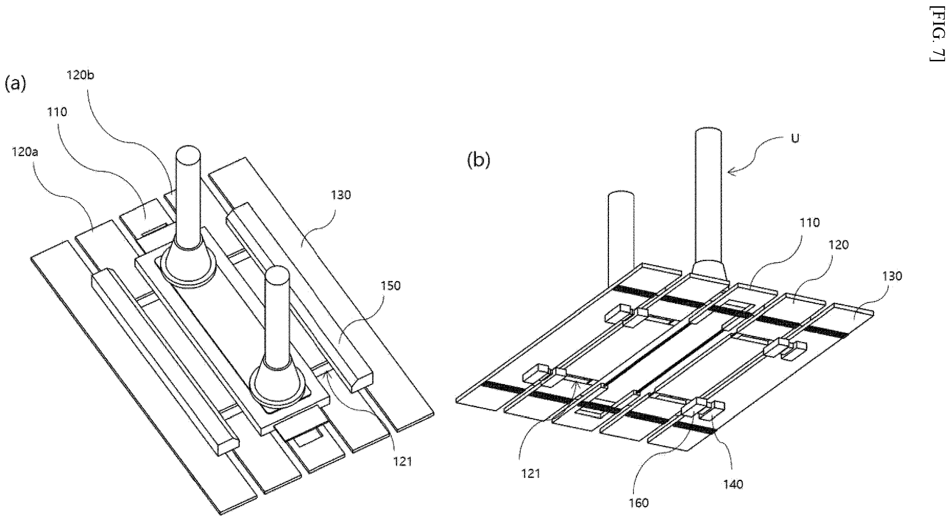

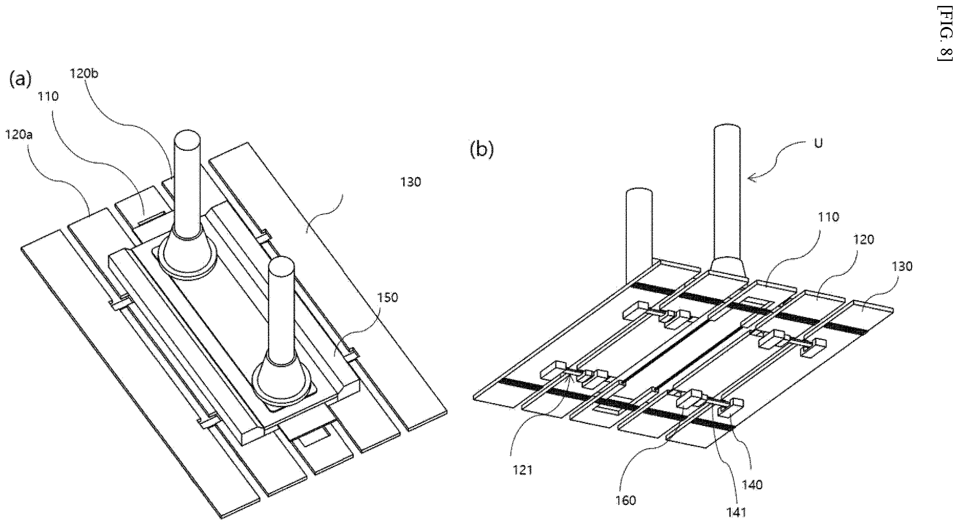

FIGS. 2 through 7(a) and (b) relate to a transfer device 1000 according to a first embodiment of the present invention, and FIGS. 8 through 10 relate to a transfer device 1000 according to a second embodiment of the present invention.

Hereinafter, the transfer device 1000 of the present invention will be described in each embodiment with reference to the drawings.

### (First embodiment)

FIG. 2 is a perspective view of a transfer device 1000 according to a first embodiment of the present invention.

The transfer device 1000 of the present invention includes a plurality of plates 1000a connected to each other, as shown in FIG. 2.

Each of the plates 1000a is spaced apart by a predetermined distance and is connected to each other by a separate connection member 1000b connecting neighboring plates 1000a, as shown in FIG. 2.

The transfer device 1000 of the present invention includes a seating part in which a battery cell C is seated. More specifically, the transfer device 1000 of the present invention includes a plurality of seating parts spaced apart at predetermined distance, wherein each of the seating part is seated with a battery cell C to be transferred.

The seating part includes a center plate 110 on which the battery cell C is seated, a support plate 120 connected to each side of the center plate 110, and a moving bar 150 moving on the support plate 120 toward the center plate 110 to support the sides of the seated battery cell C.

The battery cell C may be transferred to the seating part with its upper part adsorbed to a suction unit U as shown in FIG. 2, and is seated on the center plate 110 by movement of the suction unit U.

As described above, the battery cell C seated on the center plate 110 is transferred in one direction.

The battery cell C seated on the seating part may be seated only on the center plate 110, or may be seated across the center plate 110 and support plate 120.

The transfer device 1000 of the present invention may include a plurality of center plates 110 spaced apart at predetermined distance, wherein the battery cells C seated on each center plate 110 are all transferred in the same direction.

The support plate 120 serves to guide the battery cell C adsorbed by the suction unit U to the center of the center plate 110. More specifically, the support plate 120 serves to support the lower part of the moving bar 150 so that the moving bar 150, which moves in the upper part, can reciprocate horizontally.

The moving bar 150 reciprocates on the support plate 120 in a direction toward the center plate 110 or against the center plate 110.

The moving bar 150 moves to the center plate 110 and serves to align the position of the battery cell C seated on the center plate 110 or to pressurize and fix the battery cell C.

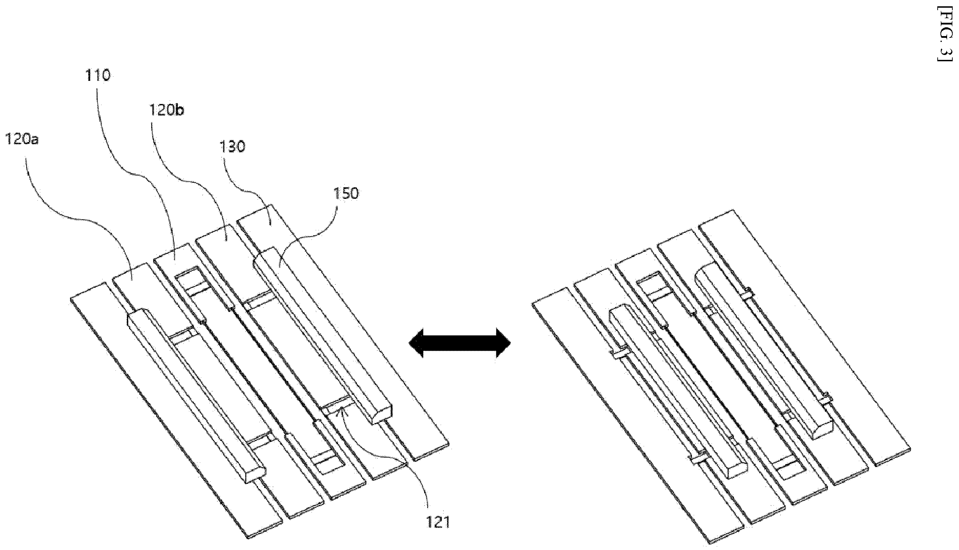

FIG. 3 illustrates a seating part of the transfer device 1000 of FIG. 2.

The moving bar 150 may be formed to extend in a direction orthogonal to the transfer direction, as shown in FIGS. 2 and 3, and the sides of the battery cell C are pressurized or supported by the sides of the extended moving bar 150.

The moving bar 150 further includes an inclined surface for guiding a battery cell C descending from the upper part to be seated on the center plate 110.

As shown in FIGS. 2 and 3, the inclined surface is formed in a corner part facing the center plate 110 among the upper corner parts of the moving bar 150, and extend along the longitudinal direction of the moving bar 150.

The battery cell C descending while being adsorbed by the suction unit U may, in case of misplacement, descend down the inward side of the moving bar 150 on the inclined surface formed on the moving bar 150 and may be seated on the center plate 110.

The moving bar 150 reciprocates toward the center plate 110 to support the sides of the seated battery cell C as shown in FIGS. 2 and 3. More specifically, the moving bar 150 located on both sides of the center plate 110 simultaneously move toward the center plate 110 on the support plate 120 to pressurize the sides of the battery cell C seated on the center plate 110.

Thus, the battery cell C, pressurized at the same rate on both sides, is aligned on the center plate 110 such that the longitudinal direction of the battery cell C is horizontal to both the longitudinal direction of the moving bar 150 and the longitudinal direction of the center plate 110.

The moving bar 150 is capable of reciprocating by an operation of a piston 141 inserted to a cylinder body 140.

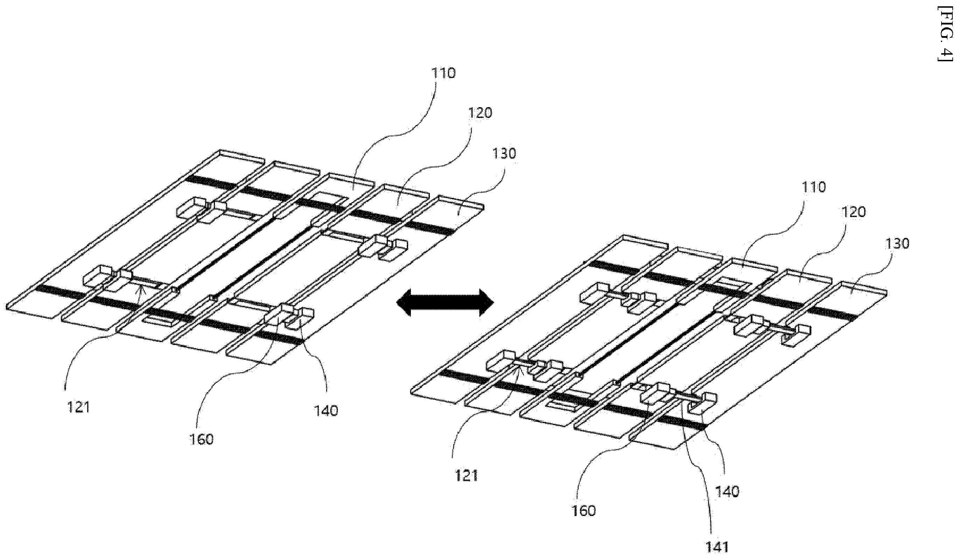

FIG. 4 is a bottom perspective view of the seating part of FIG. 3.

According to FIG. 4, the seating part includes a cylinder body 140 with a piston 141 inserted therein, which is provided at the lower part of the support plate 120 and moves reciprocally toward the center plate 110, and the moving bar 150 is coupled to the piston 141 and moves reciprocally in response to the operation of the piston 141.

The seating part of the present invention may further include an auxiliary plate 130 connected to one of the two sides of the support plate 120 opposite the center plate 110, in which case the cylinder body 140 is coupled to the auxiliary plate 130.

The cylinder body 140 is coupled to the lower part of the auxiliary plate 130 as shown in FIGS. 3 and 4, and a piston 141 inserted in the cylinder body 140 reciprocates on the lower part of the support plate 120 between the auxiliary plate 130 and the center plate 110.

The support plate 120 includes a guide part 121 extending in the transfer direction as shown in FIGS. 3 and 4, and the piston 141 moves by being guided by the guide part 121.

The piston 141 includes at its end a coupling member 160 that penetrates the guide part 121 to be coupled to the moving bar 150, and the moving bar 150 and piston 141 reciprocate in a path in which the coupling member 160 is guided by the guide part 121. That is, the moving bar 150 coupled to the piston 141 by the coupling member 160 can be moved toward the center plate 110 by the coupling member 160 being guided by the guide part 121.

As the piston 141 is inserted into the cylinder body 140, the moving bar 150 moves in a direction opposite to the center plate 110, and as the piston 141 protrudes from the cylinder body 140, the moving bar 150 moves toward the center plate 110. By such operation of the piston 141, the moving bar 150 is advanced toward the battery cell C.

The moving bar 150 may be actuated upon detection by a sensor 170.

That is, the seating part included in the transfer device 1000 of the present invention may further include a sensor 170 that detects an object.

In order to increase the efficiency of the process, the moving bar 150 is moved by detection of the sensor 170 only after the battery cell C adsorbed by the suction unit U is seated on the center plate 110.

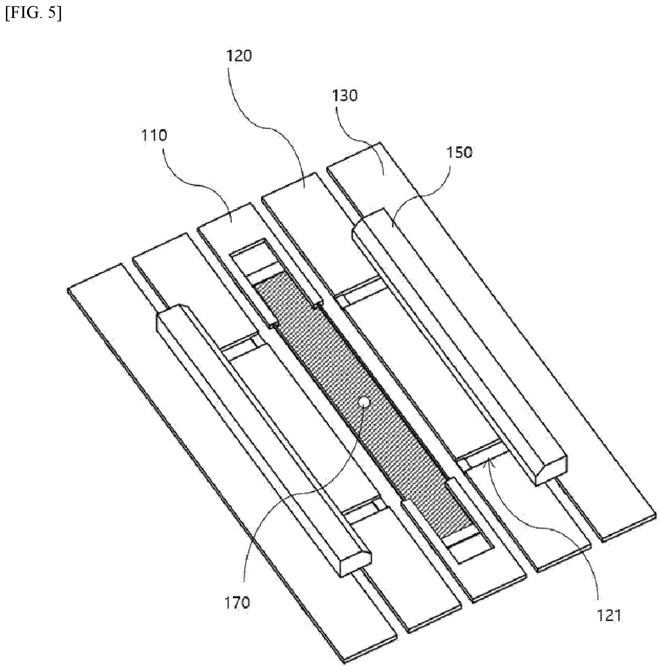

FIG. 5 illustrates a sensor 170 applied to a seating part.

The sensor 170 may preferably be provided on the center plate 110, wherein the sensor 170 included in the center plate 110 detects whether a battery cell C adsorbed and moved by the suction unit U is seated on the seating part.

The sensor 170 may be a pressure sensor that senses the weight of the battery cell C, or it may be a light sensor that senses light to detect whether the battery cell C is fully seated on the center plate 110. However, the sensor 170 of the present invention need not be limited to the above types, and any type of sensor 170 that can detect whether the battery cell C is properly seated on the center plate 110 is applicable to the transfer device 1000 of the present invention.

The support plate 120 includes a first support plate 120a connected to one side of the center plate 110, and a second support plate 120b connected to the other side of the center plate 110.

A moving bar 150 included in the first support plate 120a and the second support plate 120b move in opposite directions to each other.

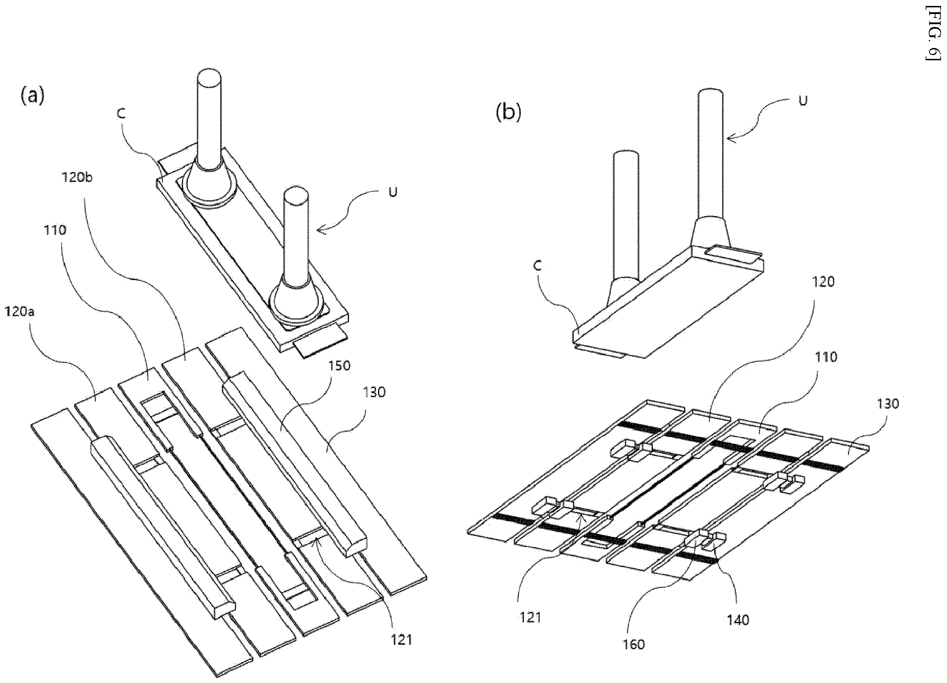

FIGS. 6(a) and (b) through 8 illustrate step-by-step the operation of the transfer device 1000 of the present invention. Specifically, FIG. 6(a) and(b) illustrates a seating part prior to seating the battery cell C, FIG. 7(a) and (b) illustrates a seating part after seating the battery cell C but before aligning the battery cell C, and FIG. 8(a) and (b) illustrates a seating part after aligning the battery cell C.

Referring to FIG. 6(a), before the battery cell C adsorbed by the suction unit U descends to the seating part, the moving bar 150 is moved as far as possible in the direction opposite to the center plate 110. At this time, referring to FIG. 6(b), the piston 141 is fully inserted into the cylinder body 140 and remains in the inserted state.

Referring to FIG. 7(a), the battery cell C adsorbed by the suction unit U descends to the seating part and is seated on the center plate 110, and at this time, the moving bar 150 is held in the position of FIG. 6(a) and (b) so that the seating of the battery cell C is not disturbed by the moving bar 150. At this time, the piston 141 also maintains the position of FIG. 6(a) and (b), as shown in FIG. 7(b).

Referring to FIG. 8(a), moving bars 150 on both sides move toward the battery cell C seated on the center plate 110 and pressurize the sides of the battery cell C. This causes the battery cell C to be pushed against the moving bars 150 so that its position can be aligned and fixed simultaneously. At this time, the piston 141 protrudes from the cylinder body 140 as shown in FIG. 8(b).

The transfer device 1000 of the present invention is installed with a moving bar 150 that moves horizontally and reciprocally to align and fix the battery cell C on the plate 1000a as described in conjunction with the drawings, so that the process of the battery cell C being seated by the moving bar 150 can be unimpeded, and also has the effect of stably aligning the position, thereby increasing the efficiency of the process.

### (Second embodiment)

The cylinder body of the present invention may be coupled directly to the support plate 120 rather than to the auxiliary plate 130.

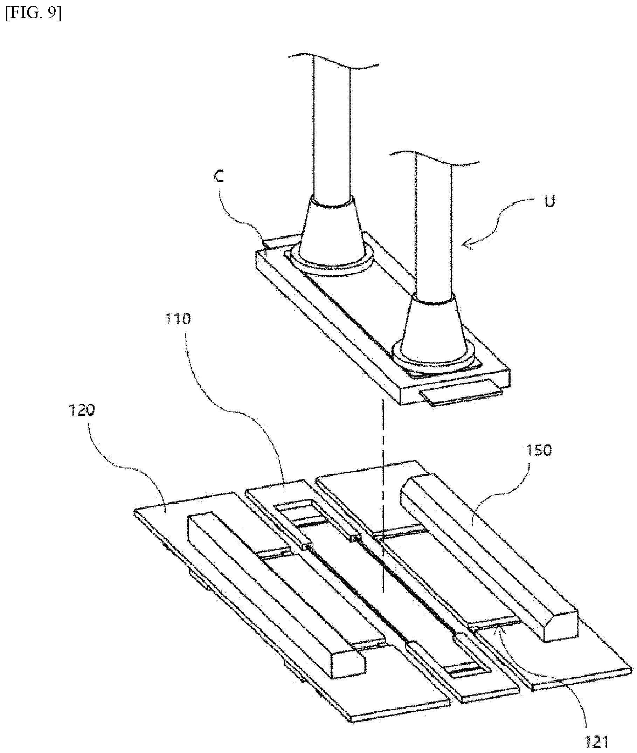

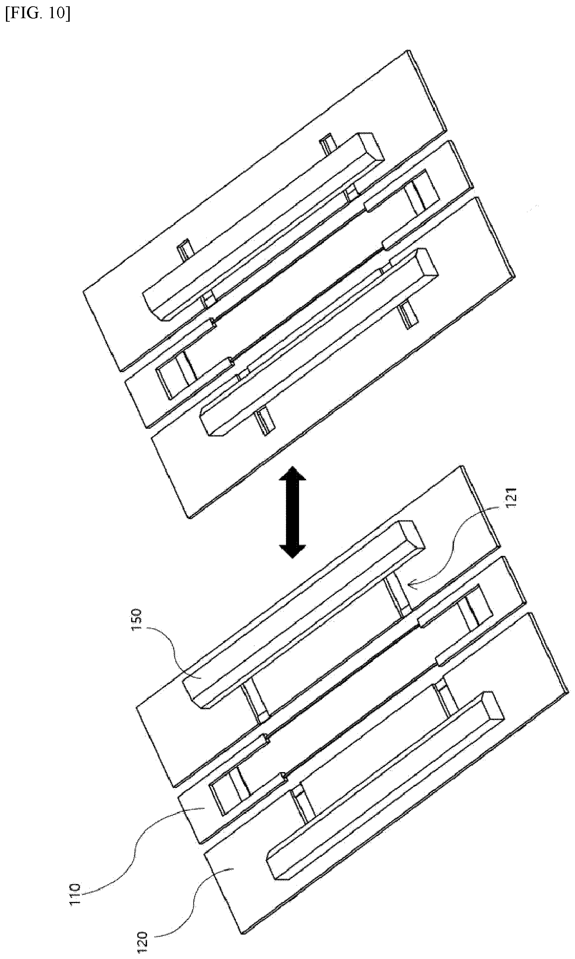

FIG. 9 is a perspective view of a transfer device 1000 according to a second embodiment of the present invention, FIG. 10 is a perspective view of a seating part included in the transfer device 1000 of FIG. 9.

The seating part includes a center plate 110, a pair of support plates 120 connected to both sides of the center plate 110, and a moving bar 150 that reciprocates horizontally on the support plates 120, as shown in FIGS. 9 and 10.

The cylinder body 140 is provided at the lower part of the support plate 120.

Specifically, the support plate 120 includes a guide part 121 extending along the transfer direction, and includes a cylinder body 140 at the lower part with a piston 141 inserted therein that reciprocates toward the center plate 110.

Thus, as shown in FIG. 9, when the battery cell C adsorbed by the suction unit U is seated on the upper part of the center plate 110, the movement of the piston 141 of the cylinder body 140 provided in the lower part of the support plate 120 causes the moving bar 150 connected with the piston 141 by a coupling member 160 to move towards the center plate 110 so as to pressurize the side of the battery cell C.

The transfer device 1000 according to the second embodiment of the present invention has the effect that more battery cells C can be transferred on the same length of transfer device 1000, since fewer plates 1000a are required to align and fix the battery cells C.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may replace them at the time of filing the present application.

### [Reference numerals]

10: (CONVENTIONAL ART) CONVEYOR
20: (CONVENTIONAL ART) PLATE
30: (CONVENTIONAL ART) SUPPORT BAR
1000: TRANSFER DEVICE
1000a: PLATE
1000b: CONNECTION MEMBER
100: SEATING PART
110: CENTER PLATE
120: SUPPORT PLATE
120a: FIRST SUPPORT PLATE
120b: SECOND SUPPORT PLATE
121: GUIDE PART
130: AUXILIARY PLATE
140: CYLINDER BODY
141: PISTON
150: MOVING BAR
160: COUPLING MEMBER
170: SENSOR
U: SUCTION UNIT
C: BATTERY CELL

## Claims

1. A transfer device comprising a plurality of interconnected plates, and unidirectionally transferring battery cells by seating them on the plates, comprising:
a seating part on which the battery cell is seated, wherein
the seating part comprises:
a center plate where a battery cell is seated;
a support plate connected to each side of the center plate; and
a moving bar moving on the support plate toward the center plate to support the sides of a seated battery cell.

2. The transfer device of claim 1, wherein
the seating part further comprises a sensor for detecting an object.

3. The transfer device of claim 2, wherein
the sensor is provided on the center plate,
the sensor provided on the center plate detects that the battery cell is seated on the center plate, and
the moving bar is moved forwardly toward the center plate upon detection by the sensor to pressurize the battery cell.

4. The transfer device of claim 1, comprising
a plurality of seating parts spaced apart in predetermined distance.

5. The transfer device of claim 1, wherein
the support plate comprises:
a first support plate connected to one side of the center plate; and
a second support plate connected to the other side of the center plate, wherein
the moving bar is provided in a pair, the pair of moving of bars are included in the first support plate and the second support plate and move toward the center plate to support and fix both sides of a battery cell seated on the center plate.

6. The transfer device of claim 5, wherein
the moving bar included in the first support plate and the second support plate moves in opposite directions to each other.

7. The transfer device of claim 1, wherein
the seating part includes a cylinder body provided at a lower part of the support plate, with a piston inserted therein reciprocating toward the center plate.

8. The transfer device of claim 7, wherein
the support plate includes a guide part extending in the transfer direction,
the piston includes a coupling member, which passes through the guide part and couples to the moving bar, at an end, wherein
a moving bar coupled to the piston is moved toward the center plate by the coupling member guided by the guide part.

9. The transfer device of claim 1, wherein
the seating part further comprises
an auxiliary plate connected to one side of the support plate that is opposite the center plate, wherein
the seating part includes a cylinder body provided at a lower part of the auxiliary plate, with a piston inserted therein reciprocating toward the center plate.

10. The transfer device of claim 9, wherein
the support plate includes a guide part extending in the transfer direction,
the piston includes a coupling member, which passes through the guide part and couples to the moving bar, at an end, wherein
the moving bar coupled to the piston is moved toward the center plate by the coupling member guided by the guide part.

11. The transfer device of claim 1, wherein
the moving bar is formed by extending in a direction orthogonal to the transfer direction.

12. The transfer device of claim 1, wherein
the moving bar includes an inclined surface at an upper corner part facing the center plate.

13. The transfer device of claim 1, further comprising
a connection member connecting the neighboring pair of plates.
